# EUROPÄISCHE PATENTANMELDUNG

(11) **EP 2 128 969 A2**
(43) Veröffentlichungstag der Anmeldung: **02.12.2009**
(21) Anmeldenummer: 09006149.0
(22) Anmeldetag: 06.05.2009
(51) Int. Cl.: H02M 3/156

(54) **Schaltregler mit PWM-Regler**

(30) Priorität: 17.05.2008 DE 102008024090
(71) Anmelder: Moeller GmbH, 53115 Bonn (DE)
(72) Erfinder: Schmitz, Gerd, 53859 Niederkassel (DE)

(57) **Zusammenfassung**

Die Erfindung betrifft einen im Shunt-Mode arbeitenden, selbstversorgenden Schaltregler mit einem von einer Stromquelle (I) über eine Ladediode (V2) auf- und nachzuladenden Speicherkondensator (C1) und mit einem PWM-Regler, der über einen Schalttransistor (V1) die Stromquelle (I) entsprechend einer oberen und einer unteren Schaltschwelle für die Ladespannung des Speicherkondensators (C1) kurzschließt bzw. zu Nachladen des Speicherkondensators (C1) freigibt. Das zu lösende Problem besteht in der Reduzierung des Bauvolumens, der Material- und Bestückungskosten sowie des Eigenstrombedarfs. Dazu besteht der PWM-Regler aus einem, hysteresebehafteten Reset-Controller (V3), dessen Versorgungsanschlüsse (Vcc, GND) wenigstens mittelbar mit dem Speicherkondensator (C1) verbunden sind und dessen Reset-Ausgang (Reset) den Schalttransistor (V1) steuert.

## Beschreibung

Die Erfindung betrifft einen im Shunt-Mode arbeitenden Schaltregler mit einem Pulsweitenmodulationsregler (PWM-Regler). Derartige Schaltregler finden bei aus Stromwandlern eigenversorgten elektronischen Einrichtungen, insbesondere von Verbrauchszählern oder Auslösesystemen von beispielsweise Leistungsschaltern und Motorschutzschaltern, Verwendung.

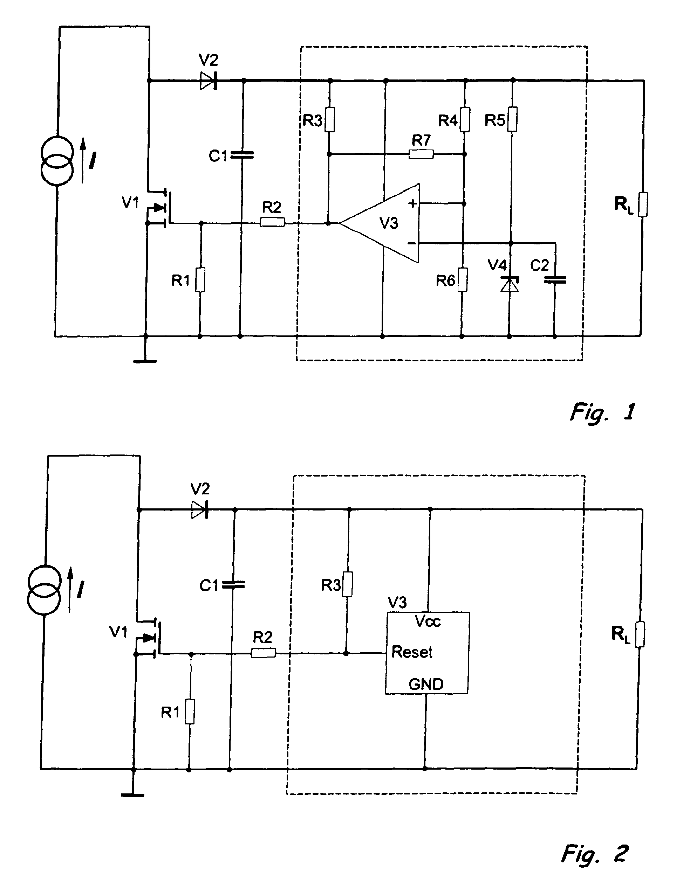

Viele elektrische Einrichtungen, wie Verbrauchszähler oder Auslösersysteme für Motorschutzschalter und Leistungsschalter, mit elektronischem Wirkprinzip besitzen keine feste Spannungsversorgung, sondern werden durch den sie fließenden Laststrom spannungsunabhängig eigenversorgt. Dabei wird der Versorgungsstrom für die elektronische Einrichtung, und häufig auch gleichzeitig das Messsignal, über Stromwandler aus dem ein- oder mehrpoligen Laststrom generiert. Der oder die Ausgangsströme der Stromwandler werden dabei über Gleichrichterdioden gleichgerichtet und miteinander verknüpft. Aus dem so gewonnenen, dem Primärstrom proportionalen Strom muss anschließend eine zur Versorgung der Mess- oder Auslöseeinrichtung geeignete konstante Spannungsversorgung gewonnen werden. Dies geschieht in der Regel über einen im Shunt-Mode arbeitenden PWM-Schaltregler entsprechend Fig. 1.

Stromwandler mit sekundärseitiger Gleichrichterschaltung sind allgemein bekannt und hier zur Vereinfachung nicht einzeln aufgeführt, sondern durch eine symbolisierte Konstantstromquelle dargestellt. Über eine Diode V2 lädt der Konstantstrom I einen Speicherkondensator C1, bis eine bestimmte Ladespannung erreicht ist. Ein Komparator V3' wird von der Ladespannung versorgt. Bei Überschreitung eines oberen Grenzwertes der Ladespannung schaltet der einen Komparator V3' aufweisende PWM-Regler (innerhalb des gestrichelten Rahmens dargestellt) über einen Widerstandsteiler R1, R2 einen Schalttransistor V1 durch, der die Stromquelle daraufhin kurzschließt. Die Versorgung der elektrischen Einrichtung, hier durch den Lastwiderstand R_{L} dargestellt, erfolgt nun allein aus dem Speicherkondensator C1. Das Schaltsignal für den Transistor V1 steht am Ausgang des Komparators V3' über einen Arbeitswiderstand R3 an. Die Diode V2 verhindert eine Entladung über den Transistor V1. Sinkt die Kondensatorspannung unter einen unteren Grenzwert, wird der Transistor V1 über den PWM-Regler wieder abgeschaltet, sodass der Speicherkondensator C1 nachgeladen wird. Der selbstlaufende PWM-Regler ist hier mit einer Komparatorschaltung aufgebaut. Eine Referenzspannungsquelle, hier durch einen Vorwiderstand R5, eine Z-Diode V4 und einen Kondensator C2 realisiert, dient zur Erzeugung der Schaltschwelle. Ein weiterer Widerstandsteiler R4, R6 dient zur Erfassung der Ladespannung am Speicherkondensator C1. Über den Komparator V3' erfolgt der Sollwertvergleich und die Ansteuerung des Schalttransistors V1. Ein Rückwiderstand R7 bestimmt in Verbindung mit dem Arbeitswiderstand R3 über Mitkopplung die Schalthysterese des PWM-Reglers.

Der beschriebene Schaltregler wird so oder in mehr oder weniger abgewandelter Form bereits in einer Vielzahl von Schaltgeräten verwendet. Neben dem Aufbau mit einem Komparator sind auch PWM-Regler mit einem Operationsverstärker bekannt. Es kommen auch verschiedene Referenzspannungsquellen zum Einsatz. Je nach Aufbau eines solchen Schaltreglers und in Abhängigkeit des verwendeten Komparators bzw. Operationsverstärkers sowie der verwendeten Referenzspannungsquelle beträgt der Eigenverbrauch der Regelschaltung einige hundert Mikroampere. Die Anzahl der erforderlichen Bauelemente für den PWM-Regler liegt bei mindestes acht, die Anzahl der Anschlusselemente bzw. Terminierungen bei neunzehn. Für kleine Schaltgeräte, wie z.B. Motorschutzschalter, die nur ein sehr geringes Einbauvolumen für Stromwandler und Auslöseelektronik ermöglichen, sind die bekannten Schaltregler daher hinsichtlich des relativ hohen Platzbedarfs, des relativ hohen Eigenstrombedarf sowie der relativ hohen Bauteil- und Bestückungskosten von Nachteil.

Der Erfindung liegt daher die Aufgabe zugrunde, Schaltregler im Shunt-Mode mit PWM-Regler hinsichtlich des benötigten Bauvolumens, der Material- und Bestückungskosten sowie des Eigenstrombedarfs zu reduzieren.

Ausgehend von einem Schaltregler der eingangs genannten Art wird die Aufgabe erfindungsgemäß durch die Merkmale des unabhängigen Anspruches gelöst, während den abhängigen Ansprüchen vorteilhafte Weiterbildungen der Erfindung zu entnehmen sind.

Durch die erfindungsgemäße Schaltungsanordnung wird die gesamte Komparatorschaltung einschließlich Referenzspannungsquelle und Erfassung der Ladespannung durch einen einzigen Baustein aus der Digitaltechnik, nämlich durch einen Reset-Controller ersetzt. Reset-Controller sind üblicherweise zum sicheren Start, d.h. zum Freischalten, eines Mikrocontrollers während des Hochfahrens der Spannungsversorgung vorgesehen, um undefinierte Zustände der Ausgangsports des Mikrocontrollers während der Anlaufphase zu unterbinden. Bei Reset-Controllern handelt es sich um integrierte Schaltkreise im üblicherweise dreipoligen Gehäuse, die es sowohl als invertierende als auch nichtinvertierende Ausführungen gibt. Reset-Controller gibt es mit gestaffelten Ansprechspannungen, sodass eine geeignete Auswahl nach der zu erzeugenden Versorgungsspannung vorzunehmen ist. Eine definierte Schalthysterese ist bereits integriert. Im Markt erhältlich ist eine breite Palette von Reset-Controllern, die sich durch einen sehr geringen Eigenstromverbrauch von wenigen Mikroampere sowie einen sehr günstigen Preis auszeichnen.

Bei Verwendung eines Reset-Controllers mit ausgangsseitiger Open-Kollektor-Schaltung ist ein Arbeitswiderstand zwischen dem Reset-Ausgang und dem hochliegenden Versorgungsanschluss des Reset-Controllers vorzusehen.

In vorteilhafter Weise dient ein zwischen dem hochliegenden Versorgungsanschluss und dem zugehörigen Anschluss des Speicherkondensators angeordneter Zusatzwiderstand in Verbindung mit einem zwischen dem Reset-Ausgang und dem hochliegenden Versorgungsanschluss angeordneten Arbeitswiderstand zur Vergrößerung der Schalthysterese. Eine zwischen dem hochliegenden Versorgungsanschluss des Reset-Controllers und dem zugehörigen Anschluss des Speicherkondensators angeordnete Z-Diode dient in vorteilhafter Weise zur Erhöhung der zu erzeugenden Versorgungsspannung. Beide Ausführungen sind bei Bedarf in vorteilhafter Weise kombinierbar.

Der PWM-Regler kann in vorteilhafter Weise sowohl mit einem nichtinvertierenden Reset-Controller in Verbindung mit einem als N-Kanal-MOSFET ausgebildeten Schalttransistor als auch mit einem invertierenden Reset-Controller in Verbindung mit einem als P-Kanal-MOSFET ausgebildeten Schalttransistor ausgeführt werden.

Weitere Einzelheiten und Vorteile der Erfindung ergeben sich aus den folgenden, anhand von Figuren erläuterten Ausführungsbeispielen. Es zeigen
- Figur 1:: den bereits beschriebenen Schaltregler nach dem Stand der Technik;
- Figur 2:: einen erfindungsgemäßen Schaltregler mit nichtinvertierendem ResetController;
- Figur 3:: einen erfindungsgemäßen Schaltregler mit invertierendem Reset-Controller;
- Figur 4:: eine andere Ausführungsform des PWM-Reglers und
- Figur 5:: eine weitere Ausführungsform des PWM-Reglers.

In bekannter Weise bilden ein oder mehrere Stromwandler und eine Gleichrichterschaltung eine Anordnung, welche den Schaltregler versorgt und in Fig. 2 als Stromquelle I symbolisch dargestellt ist. Über eine Ladediode V2 lädt die Stromquelle I einen Speicherkondensator C1. Die über den Speicherkondensator C1 anstehende Ladespannung bildet die Versorgungsspannung für eine elektrische Last R_{L}. Parallel zur Stromquelle I ist ein als N-Kanal-MOSFET ausgebildeter Schalttransistor V1 angeordnet. Ein von der strichpunktierten Umrahmung umgebener selbstlaufender PWM-Regler wird zum einen von der Ladespannung versorgt und regelt diese innerhalb enger Schwankungsgrenzen. Beim Erreichen eine obere Schaltschwelle der Ladespannung steuert der PWM-Regler über einen mit dem Bezugspotential (Masse) verbundenen Spannungsteiler R1, R2 den Schaltransistor V1 auf, wodurch die Stromquelle I über die Drain-Source-Strecke des Schaltransistors V1 kurzgeschlossen wird. In der Folge wird dem Speicherkondensator C1 keine weitere Ladung mehr zugeführt, wobei die Ladediode V2 eine Entladung des Speichertransistors über den Schalttransistor V1 verhindert. Sinkt die Ladespannung infolge der Entladung über die Last R_{L} unter eine untere Schaltschwelle, wird der Schalttransistor V1 durch den PWM-Regler zugesteuert, wodurch der Speicherkondensator C1 wieder von der Stromquelle I nachgeladen wird.

Der PWM-Regler wird nach Fig. 2 durch einen nichtinvertierenden Reset-Controller V3 und einen Arbeitswiderstand R3, der zwischen dem in Open-Kollektor-Schaltung ausgebildeten Reset-Ausgang und dem hochliegenden Versorgungsanschluss Vcc des Reset-Controllers V3 angeordnet ist. Der Reset-Controller V3 spricht beim Überschreiten einer bestimmten Spannung zwischen den Versorgungsanschlüssen Vcc und GND an, indem sein Reset-Ausgang in den nichtleitenden Zustand übergeht. Dadurch wird über den Arbeitswiderstand R3 und über den Widerstandsteiler R1, R2 der Schalttransistor V1 durchgesteuert. Infolge der nun ausbleibenden Nachladung sinkt die Ladespannung und damit die Spannung zwischen den Versorgungsanschlüssen Vcc und GND unter die untere Schaltschwelle. Die untere Schaltschwelle ergibt sich aus der Ansprechschwelle des Reset-Controllers V3, d.h. der oberen Schaltschwelle, vermindert um die in den Reset-Controller V3 bereits integrierte Schalthysterese. Beim Unterschreiten der unteren Schaltschwelle geht die Open-Kollektor-Schaltung des Reset-Ausgangs in den durchgesteuerten Zustand über. Dadurch wird der Schalttransistor über den Widerstandsteiler R1, R2 in den gesperrten Zustand überführt, worauf der Speicherkondensator C1 wieder bis zum Erreichen der oberen Schaltschwelle nachgeladen wird.

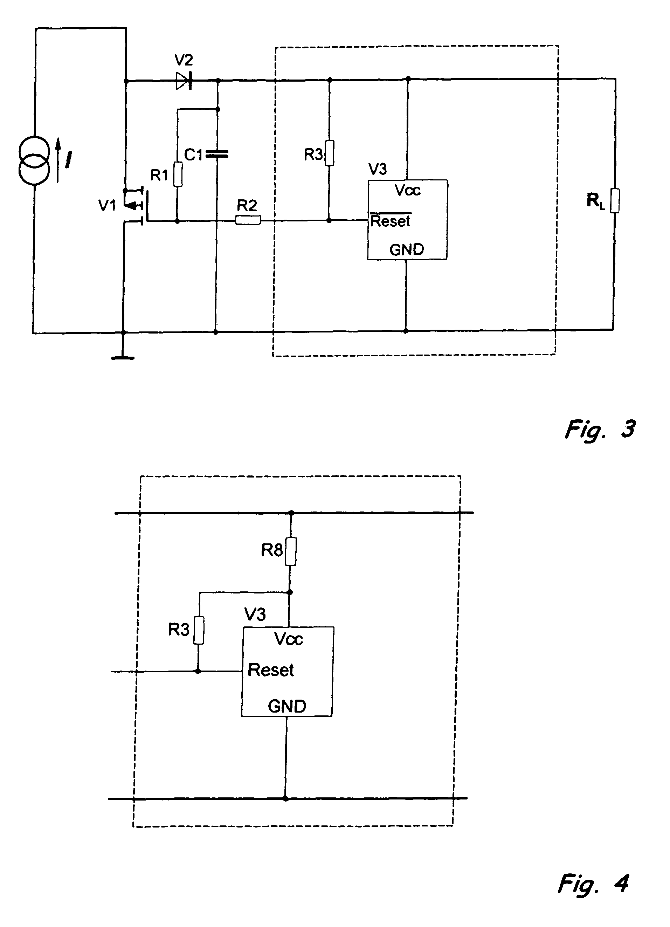

Der erfindungsgemäße Schaltregler kann ohne Weiteres mit einem invertierenden Reset-Controller V3 aufgebaut werden. Dazu ist wie in Fig. 3 gezeigt der Schalttransistor V1 durch einen P-Kanal-MOSFET zu ersetzen und der Spannungsteiler R1, R2 mit dem hochliegenden Versorgungspotential zu verbinden.

Bei dem durch die strichpunktierten Rahmen gekennzeichneten PWM-Reglern der erfindungsgemäßen Schaltregler nach Fig. 2 und Fig. 3 wurden gegenüber dem PWM-Regler des vorbekannten Schaltreglers nach Fig. 1 der Eigenstrombedarf auf ein Drittel, die Anzahl der Bauteile von acht auf zwei und die Anzahl der Terminierungen von neunzehn auf fünf vermindert.

Ist die Schalthysterese des Reset-Controllers nicht ausreichend, so kann diese auf einfache Weise erhöht werden. Fig. 4 zeigt einen solchen Aufbau für einen PWM-Regler mit einem nichtinvertierenden Reset-Controller V3. Hier wird die Schalthysterese durch einen in der Verbindungsleitung zum hochliegenden Versorgungsanschluss Vcc eingefügten Zusatzwiderstand R8 im Zusammenwirken mit dem Arbeitswiderstand R3 über die Eigenhysterese des Reset-Controllers V3 angehoben.

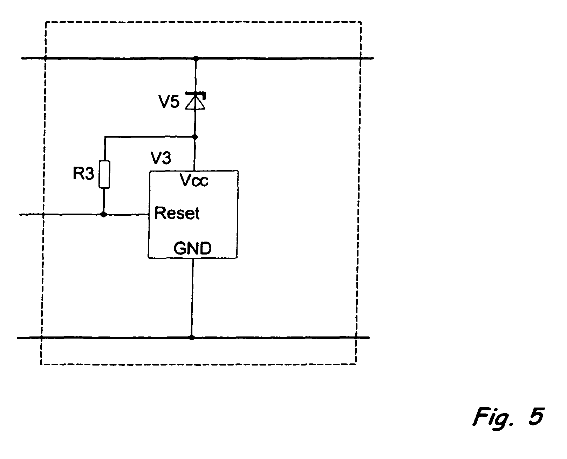

Weiterhin bietet sich die Möglichkeit, die Ausgangsspannung des Schaltreglers, d.h. die Versorgungsspannung, gemäß Fig. 5 durch eine in der Verbindungsleitung zum hochliegenden Versorgungsanschluss Vcc des Reset-Controllers V3 eingefügte Z-Diode V5 anzuheben. Die Versorgungsspannung wird hier um den Betrag der Z-Spannung erhöht.

Auch die Ausführungen des erfindungsgemäßen Schaltreglers nach Fig. 4 und Fig. 5 weisen noch in ausreichendem Maße die erwähnten Vorteile gegenüber dem bekannten Schaltregler nach Fig. 1 auf.

Die vorliegende Erfindung ist nicht auf die vorstehend beschriebenen Ausführungsformen beschränkt. So lassen sich die Ausführungen nach Fig. 4 und 5 miteinander kombinieren.

## Patentansprüche

1. Im Shunt-Mode arbeitender Schaltregler, enthaltend
- einen Speicherkondensator (C1), der über eine Ladediode (V2) von einer mindestens einen Stromwandler und eine Gleichrichteranordnung aufweisende Stromquelle (I) aufgeladen wird und dessen Ladespannung die Versorgungsspannung für den Schaltregler selbst und eine elektrische Last (R_{L}) bildet,
- einen Schaltransistor (V1), der bei Überschreiten einer oberen Schaltschwelle bzw. bei Unterschreiten einer unteren Schaltschwelle der Ladespannung die Stromquelle (I) kurzschließt bzw. zum Nachladen freigibt, sowie
- einen von der Ladespannung gesteuerten PWM-Regler, der eine mit einer Schalthysterese ausgestattete Komparatorschaltung sowie eine Referenzspannungsquelle aufweist und über einen Widerstandsteiler (R1, R2) den Schalttransistor (V1) steuert,
**dadurch gekennzeichnet,**
- **dass** der PWM-Regler aus einem hysteresebehafteten Reset-Controller (V3) besteht, dessen Versorgungsanschlüsse (Vcc, GND) wenigstens mittelbar mit dem Speicherkondensator (C1) verbunden sind und dessen Reset-Ausgang (Reset) den Schalttransistor (V1) steuert.

2. Schaltregler nach vorstehendem Anspruch, **dadurch gekennzeichnet, dass** zwischen dem Reset-Ausgang und dem hochliegenden Versorgungsanschluss (Vcc) des Reset-Controllers (V3) ein Arbeitswiderstand (R3) angeordnet ist.

3. Schaltregler nach vorstehendem Anspruch, **dadurch gekennzeichnet, dass** zwischen dem hochliegenden Versorgungsanschluss (Vcc) und dem Speicherkondensator (C1) ein Zusatzwiderstand (R8) angeordnet ist.

4. Schaltregler nach einem der vorstehenden Ansprüche, **dadurch gekennzeichnet, dass** zwischen dem hochliegenden Versorgungsanschluss (Vcc) des Reset-Controllers (V3) und dem Speicherkondensator (C1) eine Z-Diode (V5) angeordnet ist.

5. Schaltregler nach einem der Ansprüche 1 bis 4, **dadurch gekennzeichnet, dass** der Reset-Controller vom nichtinvertierenden Typ und der Schalttransistor (V1) vom Typ N-Kanal-MOSFET ist.

6. Schaltregler nach einem der Ansprüche 1 bis 4, **dadurch gekennzeichnet, dass** der Reset-Controller vom invertierenden Typ und der Schalttransistor (V1) vom Typ P-Kanal-MOSFET ist.
